(19) Europäisches Patentamt

European Patent Office

Office européen des brevets

(11) **EP 1 545 019 A1**

(12) **EUROPEAN PATENT APPLICATION**

(43) Date of publication:
**22.06.2005 Bulletin 2005/25**

(51) Int Cl.[7]: **H04B 1/707**, G01S 1/00

(21) Application number: **03388089.9**

(22) Date of filing: **19.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Telefonaktiebolaget LM Ericsson (publ)**
**164 83 Stockholm (SE)**

(72) Inventors:
• **Wilhelmsson, Leif**
  **240 10 Dalby (SE)**
• **Reial, Andres**
  **222 41 Lund (SE)**

(74) Representative: **Boesen, Johnny Peder et al**
  **Zacco Denmark A/S**
  **Hans Bekkevolds Allé 7**
  **2900 Hellerup (DK)**

(54) **GPS receiver using differential correlation**

(57)     A method of detecting a spreading code of a received spread-spectrum signal, in particular a spreading code identifying a space vehicle of a GPS system. The method comprises correlating the received spread-spectrum signal with a reference signal to detect the presence of one of a number of reference spreading codes. The correlating further comprises differentiating at least one of the received spread-spectrum signal, the reference signal, and the correlation signal, the correlating resulting in a differentiated correlation signal.

Fig. 3a

**Description**

FIELD OF THE INVENTION

This invention relates to the detection of a spreading code of a received spread-spectrum signal and, in particular, to the detection of a spreading code of a received spread-spectrum signal of a positioning system, the spreading code identifying one of a number of signal sources.

BACKGROUND OF THE INVENTION

The Global Positioning System (GPS) is a positioning system that provides accurate, worldwide, three-dimensional position information to users with appropriate receiving equipment. GPS includes a number of satellites, currently 24 satellites orbiting in six orbital planes with four satellites per plane, and a worldwide ground control and monitoring network for monitoring the health and status of the satellites. Each of the satellites transmits a signal with a specific structure and comprising navigation data. GPS receiving equipment receives the signals from a subset of the number of satellites and determines the current position of the equipment from the received signals. The position of a GPS receiver may be computed when signals from at least four satellites are reliably received and measured. The transmitted signals have a direct sequence spread spectrum structure, also known as direct sequence code division multiple access (DS-CDMA) structure. DS-CDMA is one of two approaches to spread spectrum modulation for wireless communication of digital signals. In direct sequence spread spectrum, the stream of information to be transmitted is spread over a larger bandwidth than actually necessary for communications. This is achieved essentially by multiplying the data with a spreading sequence that has a much higher rate than the rate of the data stream. The rate of the spreading sequence divided by the rate of the data is commonly known as spreading ratio or processing gain. The spreading code helps the signal resist interference and also enables the original data to be recovered if some spreading chips are unreliable. In GPS, a DS-CDMA structure is used with a 1023-chip spreading sequence and a period of 1 ms.

Superimposed on the spreading sequence is a 50 bits per second navigation data sequence that contains the information required for positioning. The positioning algorithm implemented by a GPS receiver is based on a determination of signal propagation delays by measuring the signal arrival times and by extracting satellite positions and transmission times from the navigation data sequence. The GPS receiver combines multiple distance measurements to triangulate the receiver position.

The signal detection at the receiver is carried out by correlating the received signal sequence with a reference code. Each satellite spreads its message with its own spreading code, a so-called Gold code, such that different codes have a small cross-correlation with each other. In order to determine the signal delay, the receiver correlates the received signal with the Gold code for a given satellite and for different relative delays of the reference code. The correlation value has a well-defined peak when the delay of the correct reference code matches the actual delay of the received signal. At other delays, or for codes different from the Gold code of the satellite that has transmitted the received signal, the cross-correlation is very low, typically at least 24 dB lower than the peak value. When a peak is detected, the position of the peak is subsequently tracked by a delay-locked loop in order to determine the precise location of the loop.

One of the most demanding tasks of a GPS receiver is the initial acquisition of the satellites. Without any prior knowledge, e.g. as to the approximate position, an autonomous GPS receiver may need to search through all satellites, all possible code delays, and all possible frequency offsets in order to identify the Gold code and delay parameter of the received signal. Hence, the initial signal acquisition may require a multi-dimensional search, thereby rendering the initial acquisition a time-consuming task requiring many computational resources. Since the received signal level is very low, typically 20-50dB below the receiver noise floor, the correlation samples typically need to be accumulated over rather long dwell times. A further complication is the presence of frequency offsets in the received signal caused by satellite Doppler effects and due to errors introduced by the local oscillators of the GPS receiver.

It is known to provide a priori knowledge to a GPS receiver in order to reduce the search space of the initial signal acquisition, e.g. by limiting the search to satellites expected to be visible over the horizon from the present expected location. For example, some GPS receivers are integrated into mobile terminals. Such devices may receive information from a cellular telecommunications network, e.g. about the approximate location of the device, thereby assisting the initial acquisition.

However, it is a problem of the above prior art systems, that they require the presence of a priori information in order to speed up the acquisition. For example, not all cellular networks provide such information, and autonomous GPS receivers that are not integrated with a mobile terminal may not have access to such information. Furthermore, in areas without network coverage this information is not available either.

Hence it is an object of the present invention to increase the efficiency of the initial data acquisition.

SUMMARY OF THE INVENTION

The above and other problems are solved by a method of detecting a spreading code of a received spread-spectrum signal, the method comprising correlating the received spread-spectrum signal with a reference signal to detect the presence of one of a number of reference spreading codes; wherein the correlating further comprises differentiating at least one of the received spread-spectrum signal, the reference signal, and the correlation signal, the correlating resulting in a differentiated correlation signal.

It has been realised by the inventor that the computational complexity of the initial signal acquisition can be significantly reduced when the correlation is combined with a differentiation.

It is a further advantage of the invention that it provides a fast signal detection process.

It is a further advantage of the invention that it provides a detection method that is robust against frequency offsets and insensitive to frequency instabilities of the received signal.

According to a preferred embodiment of the invention, the method further comprises accumulating the differentiated correlation signal to obtain a correlation value. Consequently, the signal-to-noise ratio of the resulting correlation value is improved, thereby allowing reliable signal detection even in situations with a low signal-to-noise ratio (SNR) of the received signal. Reliable signal detection at low SNRs is achieved even without network assistance information, e.g. from a cellular telecommunications network.

It is a further advantage of the invention that any phase rotation per chip does not accumulate during the accumulation of the correlation signal. Consequently, the correlation values are robust against frequency errors in the received signal. This has the advantage that the initial search space is reduced, since the search for any given spreading code may be limited to different code delays without having to take different frequency offsets into account.

In another preferred embodiment, the method further comprises despreading the received signal and extracting navigation data, e.g. the navigation message of a GPS signal, from the despread signal. However, this requires knowledge of the actual frequency error.

Consequently, it is further preferred that the method further comprises detecting a frequency error from the determined correlation value. Consequently, it is an advantage that the actual frequency error is efficiently estimated from the accumulated correlation value and, thus, made available for the subsequent signal processing without requiring significant additional computational resources. In a preferred embodiment, the method further comprises determining a frequency compensation factor from the angle argument of the correlation value.

In situations where the SNR of the received signal is low, the dwell time required for reliable signal detection is long. In the context of GPS, particularly low SNR are present when the GPS receiver is used in difficult reception conditions, e.g. indoors. The correlation signal may be accumulated coherently or non-coherently. In a preferred embodiment, the correlation signal is accumulated coherently by summing the complex product values, thereby further reducing the required processing time for a given SNR. In prior art systems, the presence of navigation data does not allow unlimited coherent accumulation due to bit transitions of the navigation data. It has been realised by the inventors that a coherent accumulation of the differentiated correlation signal over long accumulation times provides a significant improvement of the reliability of the signal detection, in particular for signals with a low SNR.

Hence, in a preferred embodiment, the accumulating comprises coherently accumulating the differentiated correlation signal. In a further preferred embodiment the received spread-spectrum signal comprises a digital information message encoded as bits, wherein bit transitions of the digital information message occur at predetermined transition time intervals; and coherently accumulating comprises coherently accumulating the differentiated correlation signal over a time interval that is longer than half the transition time interval. Long coherent accumulation times larger than half the transition time interval between bit transitions of the navigation message are possible, because the accumulated differential correlation signal is insensitive to the navigation message. Consequently, even longer accumulation times are possible, even larger than the transition time interval, thereby improving the reliability of signal detection, even under difficult reception conditions.

In a preferred embodiment, the method comprises

- providing a plurality of reference signals modulated by said one of a number of reference spreading codes and delayed by respective relative code delays;
- correlating the received spread-spectrum signal with the plurality of reference signals to obtain a corresponding plurality of differentiated correlation signals;
- accumulating each of the plurality of differentiated correlation signals to obtain a corresponding plurality of correlation values for respective code delays; and
- detecting a correlation peak in the plurality of correlation values to identify a code delay of the received spread-spectrum signal.

In another preferred embodiment, the method further comprises

- correlating the received spread-spectrum signal with a plurality of reference signals, each modulated by a corresponding one of the number of reference spreading codes, to obtain a corresponding plurality of differentiated correlation signals;
- accumulating each of the plurality of differentiated correlation signals to obtain a corresponding plurality of correlation values for respective reference spreading codes; and
- detecting a correlation peak in the plurality of correlation values to identify a spreading code of the received spread-spectrum signal.

Hence, an efficient method of detecting peaks in the correlation values for different code delays and/or different satellites is provided, thereby efficiently detecting the visible satellites and code delays/pseudoranges.

In a preferred embodiment, the correlating comprises differentiating the received signal and the reference signal to obtain a differentiated received signal and a differentiated reference signal; and determining the differentiated correlation signal from the differentiated received signal and the differentiated correlation signal. In another preferred embodiment, the correlating comprises determining a correlation signal from the received signal and the reference signal; and differentiating the correlation signal to obtain the differentiated correlation signal. Hence, the steps of differentiating and determining a correlation signal may be interchanged.

Preferably, the received signal is provided as a sequence of received signal samples; and the correlating and differentiating steps are performed on the signal samples. In a preferred embodiment, the reference signal is modulated at a predetermined chip rate by a reference spreading code comprising a predetermined sequence of code chips; the correlating comprises sampling the reference spread-spectrum signal resulting in a sequence of received signal samples; the reference signal comprises a sequence of reference samples; and the correlating comprises

- correlating samples of the sequence of received signal samples with samples of the sequence of reference samples to obtain a sequence of correlation samples; and
- accumulating samples of at least a sub-sequence of the sequence of correlation samples to obtain a correlation value.

In a preferred embodiment, differentiating comprises multiplying a signal sample with the complex conjugate of the delayed signal sample, i.e. one of the preceding signal samples of a sequence of signal samples. In one embodiment, the delay corresponds to one spreading chip, i.e. the preceding signal sample is the immediately preceding signal sample, thereby simplifying the system design, since only one delay element is required.

In other embodiments, the delay corresponds to a plurality of spreading chips, thereby providing a more accurate estimate of the frequency error. Since the maximum detectable frequency error depends on the selected delay, in a preferred embodiment, the delay is selected as large as possible while still allowing the estimation of the largest expected frequency uncertainty.

In alternative embodiments, the differentiating may be performed in a different way. For example, in particular in situations where the frequency error is relatively small, the differentiating may be performed by subtracting a preceding signal sample from the current signal sample. In this embodiment it is preferred that, after the subtraction, the absolute value of the subtracted signal is taken before the subsequent summation.

In another preferred embodiment, correlating samples of the sequence of received signal samples with samples of the sequence of reference samples further comprises

- differentiating the sequence of received signal samples and the sequence of reference samples;
- multiplying the differentiated sequence of received signal samples with the differentiated sequence of reference samples to obtain the sequence of correlation samples.

In yet another preferred embodiment, correlating samples of the sequence of received signal samples with samples of the sequence of reference samples further comprises

- multiplying the sequence of received signal samples with the sequence of reference samples to obtain a sequence of multiplied samples; and
- differentiating the sequence of multiplied samples to obtain the sequence of correlation samples.

In yet another preferred embodiment, spreading code is indicative of one of a number of signal sources, e.g. one of a number of space vehicles of a positioning system such as GPS.

The spreading code may be a pseudo-random-noise code. In a preferred embodiment, the spreading code is a Gold code.

Further preferred embodiments are disclosed in the dependant claims.

It is noted that the features of the method described above and in the following may be implemented in software and carried out on a data processing system or other processing means caused by the execution of program code means such as computer-executable instructions. Here and in the following, the term processing means comprises any circuit and/or device suitably adapted to perform the above functions. In particular, the above term comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

For example, the program code means may be loaded in a memory, such as a RAM, from a storage medium or from another computer via a computer network. Alternatively, the described features may be implemented by hardwired circuitry instead of software or in combination with software.

The present invention can be implemented in different ways including the method described above and in the following, an arrangement, and a device, each yielding one or more of the benefits and advantages described in connection with the first-mentioned method, and each having one or more preferred embodiments corresponding to the preferred embodiments described in connection with the first-mentioned method.

The invention further relates to an arrangement for detecting a spreading code of a received spread-spectrum signal, the arrangement comprising correlation means for correlating the received spread-spectrum signal with a reference signal to detect the presence of one of a number of reference spreading codes; wherein the correlation means comprises means for differentiating at least one of the received spread-spectrum signal, the reference signal, and the correlation signal, the correlating resulting in a differentiated correlation signal.

In a preferred embodiment, the arrangement further comprises accumulator means for accumulating the differentiated correlation signal to obtain a correlation value.

In a preferred embodiment, the arrangement further comprises means for detecting a frequency error from the determined correlation value.

In a preferred embodiment, the arrangement further comprises means for determining a frequency compensation factor from the angle argument of the correlation value.

In a preferred embodiment, the accumulator means is adapted to coherently accumulate the differentiated correlation signal.

In a preferred embodiment, the received spread-spectrum signal comprises a digital information message encoded as bits, wherein bit transitions of the digital information message occur at predetermined transition time intervals; and the accumulator means is adapted to coherently accumulate the differentiated correlation signal over a time interval that is longer than half the transition time interval.

In a preferred embodiment, the arrangement further comprises means for providing a plurality of reference signals modulated by said one of a number of reference spreading codes and delayed by respective relative code delays; the correlation means is adapted to correlate the received spread-spectrum signal with the plurality of reference signals and to generate a corresponding plurality of differentiated correlation signals; and the arrangement further comprises accumulator means for accumulating each of the plurality of differentiated correlation signals and for generating a corresponding plurality of correlation values for respective code delays; and peak detection means for detecting a correlation peak in the plurality of correlation values and for identifying a code delay of the received spread-spectrum signal.

In a preferred embodiment, the correlation means is adapted to correlate the received spread-spectrum signal with a plurality of reference signals, each modulated by a corresponding one of the number of reference spreading codes, and to generate a corresponding plurality of differentiated correlation signals; and the arrangement further comprises accumulator means for accumulating each of the plurality of differentiated correlation signals and for generating a corresponding plurality of correlation values for respective reference spreading codes; and peak detection means for detecting a correlation peak in the plurality of correlation values and for identifying a spreading code of the received spread-spectrum signal.

In a preferred embodiment, the arrangement further comprises means for despreading the received spread-spectrum signal and for extracting information data from the despread signal.

In a preferred embodiment, the means for differentiating is adapted to differentiate the received spread-spectrum signal and the reference signal and to generate a differentiated received signal and a differentiated reference signal; and the correlation means is adapted to determine the differentiated correlation signal from the differentiated received signal and the differentiated reference signal.

In a preferred embodiment, the correlation means is adapted to determine a correlation signal from the received spread-spectrum signal and the reference signal; and the means for differentiating is adapted to differentiate the correlation signal to obtain the differentiated correlation signal.

In a preferred embodiment, the means for differentiating a signal comprises a multiplier for multiplying a signal sample of the signal with the complex conjugate of a preceding signal sample.

In a preferred embodiment, the reference signal is modulated at a predetermined chip rate by a reference spreading code comprising a predetermined sequence of code chips; wherein the arrangement comprises sampling means for sampling the reference spread-spectrum signal resulting in a sequence of received signal samples; wherein the reference signal comprises a sequence of reference samples; wherein the correlation means is adapted to correlate samples of the sequence of received signal samples with samples of the sequence of reference samples to obtain a sequence of correlation samples; and wherein the arrangement further comprises accumulator means for accumulating samples of at least a sub-sequence of the sequence of correlation samples to obtain a correlation value.

In a preferred embodiment, the correlation means comprises

- means for differentiating the sequence of received signal samples and the sequence of reference samples;
- multiplier means for multiplying the differentiated sequence of received signal samples with the differentiated sequence of reference samples to obtain the sequence of correlation samples.

In a preferred embodiment, the correlation means comprises

- multiplier means for multiplying the sequence of received signal samples with the sequence of reference samples to obtain a sequence of multiplied samples; and
- means for differentiating the sequence of multiplied samples to obtain the sequence of correlation samples.

In a preferred embodiment, the spreading code is indicative of one of a number of signal sources, e.g. one of a number of space vehicles of a positioning system such as GPS.

In a preferred embodiment, the spreading code is a pseudo-random-noise code. In a preferred embodiment, the spreading code is a Gold code.

The invention further relates to a device comprising such an arrangement. In one embodiment, the device is a communications device, e.g. a mobile terminal with an integrated GPS receiver. The term communications device comprises any device comprising suitable circuitry for receiving and/or transmitting communications signals, e.g. radio communications signals, to facilitate data communication. Examples of such devices include portable radio communications equipment and other handheld or portable devices. The term portable radio communications equipment includes all equipment such as mobile telephones, pagers, communicators, i.e. electronic organisers, smart phones, personal digital assistants (PDAs), handheld computers, or the like.

In other embodiments, the device is a stand-alone GPS device.

BRIEF DESCRIPTION OF THE DRAWINGS

The above and other aspects of the invention will be apparent and elucidated from the embodiments described in the following with reference to the drawing in which:

fig. 1 shows a schematic block diagram of a GPS receiver;

fig. 2 illustrates the search space for the initial signal acquisition;

figs. 3a-b illustrate more detailed functional block diagrams of embodiments of the digital receiver block;

figs. 4a-b schematically illustrate different embodiments of the ordering of differentiation and correlation blocks.

DETAILED DESCRIPTION OF THE PREFERRED EMBODIMENTS

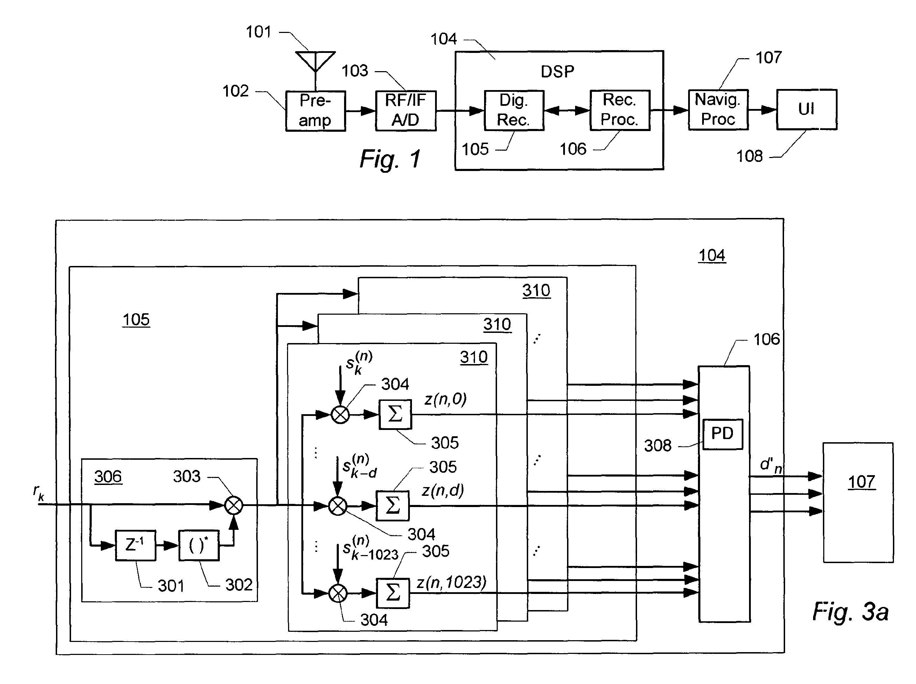

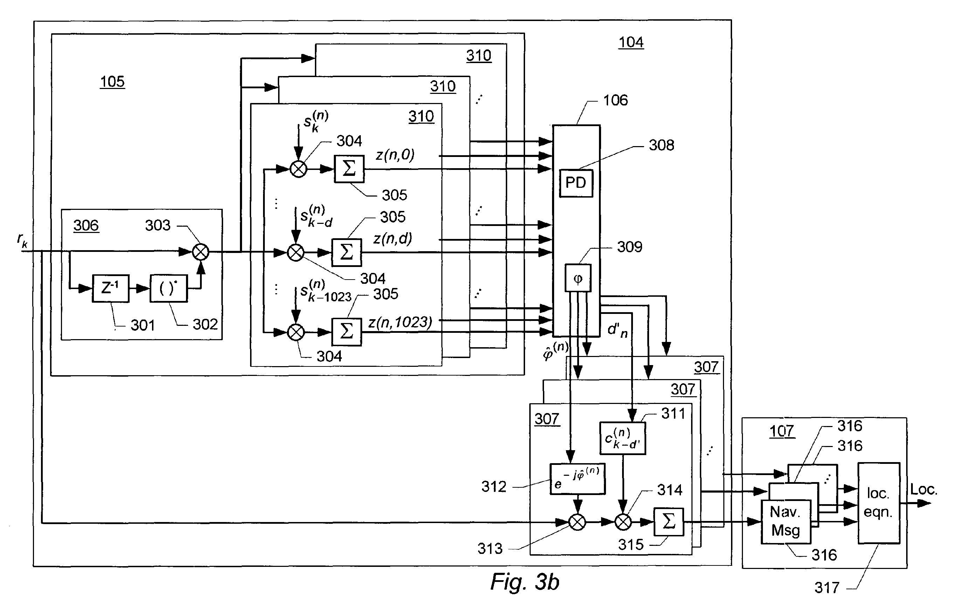

Fig. 1 shows a schematic block diagram of an embodiment of a digital GPS receiver. The GPS receiver comprises an antenna 101, e.g. a right-hand circularly polarized (RHCP) antenna with substantially hemispherical gain coverage, for receiving the GPS radiofrequency (RF) signals of all satellites in view. The received RF signals are fed into a pre-amplifier 102 which amplifies the received signals. There may be a passive bandpass pre-filter between the antenna and the pre-amplifier to minimize out-of-band RF interference. The amplified and optionally filtered RF signals generated by preamplifier 102 are then fed into a down-conversion and analog-to-digitial conversion block 103. In block 103, the signals are down-converted to an intermediate frequency (IF) using signal mixing frequencies from local oscillators (not explicitly shown). Block 103 further performs an analog-to-digital (A/D) conversion of the down-converted signal. Furthermore, block 103 may comprise additional functions, such as an automatic gain control (AGC). The resulting digitized IF signal is fed to a digital signal processing block 104. Hence, block 104 receives a signal comprising signals from all GPS satellites in view. Typically, the signals are buried in the thermal noise at IF. At this stage, no demodulation has yet taken place, only signal conditioning and conversion to the digital IF. The digital signal processing block 104 comprises a digital receiver block, typically comprising a number of digital receiver channels. The digital receiver block may be implemented in one or more application specific integrated circuits (ASICs). The digital processing block further comprises a receiver processing block 106 that implements baseband functions such as loop discriminators and filters, data demodulation, phase-lock indicators, and/or the like. In one embodiment, the receiver processing block 106 is implemented as a suitably programmed microprocessor. The receiver processing block 106 further performs decision-making functions associated with controlling the signal processing functions of the digital receiver block. In particular, blocks 105 and 106 perform the initial signal acquisition and the subsequent tracking of the received signals to obtain timing information for the subsequent calculation of the current position. Block 106 further comprises the demodulation of the received signals to extract the navigation message. A more detailed description of examples of the above components of a GPS receiver may be found in e.g. "Understanding GPS, Principles and applications", E. D. Kaplan (ed.), Artech House, 1996. Embodiments of the signal acquisition functions performed by blocks 105 and 106 will be described in greater detail below.

The GPS receiver further comprises a navigation processing block 107, e.g. a suitably programmed microprocessor or other processing means. The navigation processing block receives the extracted navigation data and the timing information from block 104 and calculates a position based on the received data using algorithms known in the art of GPS receivers (see e.g. ibid.). The calculated position data is finally presented to the user via user interface 108, e.g. a display. It is understood that, alternatively or additionally, the position information may be used as an input to further data processing functions. Hence, alternatively or additionally to user interface block 108, other interface functions may be provided.

It is noted that some or all of the above digital signal processing and/or data processing functions may be combined in the same circuitry. For example, in some embodiments a single high-speed microprocessor supports the receiver, and implements the navigation and user interface functions.

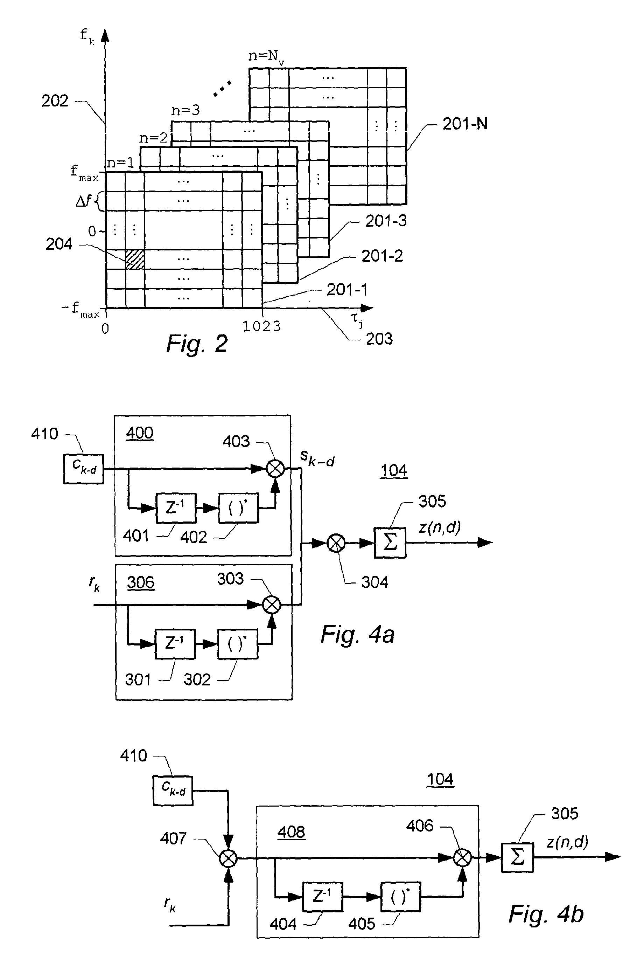

Fig. 2 illustrates the search space for the initial signal acquisition. In order to perform the navigation processing, the GPS receiver needs to identify the satellites from which data is received, and the receiver needs to determine the relative delay of the corresponding received spreading code. Once the GPS signals from sufficiently many satellites are acquired, they may subsequently be tracked, e.g. by a delay-locked loop. As mentioned above, in the context of GPS the spreading codes are so-called Gold codes (see e.g. R. Gold, "Optimal Binary Sequences for Spread Spectrum Multiplexing," IEEE transactions Info. Theory, Vol. 33, No. 3, October 1967, pp. 619-621).

Without any prior knowledge, an autonomous GPS receiver needs to search through all satellites, all possible code delays, and all possible frequency offsets in order to identify the Gold code and delay parameter of the received signal. Hence, as shown in fig. 2, the initial search space may be illustrated as a three-dimensional search space where the search is performed over:

- Multiple satellites: In the following the satellites will be labelled $n = 1,..,N_v$, where $N_v$ is the number of visible satellites. In GPS, $N_v \leq 24$. If no a priori information is available allowing to rule out some of the satellites as not currently visible, all 24 satellites may have to be searched.
- The code delay $\tau_j$, $j = 1, ..., N_t$, of the reference code with respect to the received spreading code. In GPS, the spreading codes comprise 1023 chips, i.e. $N_t = 1023$.
- The frequency offset $f_k$. In the following the frequency offset is assumed to be scanned in an interval $[-f_{max}, f_{max}]$ in steps of $\Delta f$, i.e. $f_k - f_{max} + k \cdot \Delta f$, $k = 0,..., N_f = 2f_{max}/\Delta f$.

In fig. 2, the search space is illustrated as a number of 2D search areas in a $\tau_j$ - $f_k$ plane spanned by the $\tau_j$-axis 203 and the $f_k$-axis 202, where each plane corresponds to a satellite. The 2D search areas are designated 201-1, 201-2, 203-3,and ,201-N, Each area is divided into a number of cells, each cell corresponding to a satellite $n$, a frequency offset $f_k$, and a delay $\tau_j$, i.e. each cell may be indexed by $(n,j,k)$.

In the following, the processing time required for searching all the $(N_v \cdot N_t \cdot N_f)$ cells of the above search space is estimated. For the purpose of this estimation it is assumed that for each cell, e.g. for cell 204, a proper spreading code is selected and delayed by an appropriate delay value $\tau_j$. Furthermore, it is assumed that a received signal is compensated for a frequency offset $f_k$, i.e. de-rotated, and the frequency-compensated signal is correlated with the delayed reference spreading code. The correlation results for groups of chips are assumed to be accumulated coherently and the accumulated correlation value is compared to a threshold in order to identify a peak correlation value. The required accumulation time, or dwell time, for each cell is selected to be $T_{dw} = G\ T_c$, where $T_c$ is the chip period, i.e. the duration of a spreading chip, and where G is a target processing gain that depends on the received chip SNR $\gamma$ and on the desired SNR of the resulting decision variable. For the purpose of the current estimate, the target processing gain is assumed to be 10dB. In that case $10/\gamma$ chips have to be accumulated coherently, in order to rise 10dB above the noise floor for making a decision.

Furthermore, the resolution $\Delta f$ of the frequency grid 202 also depends on the dwell time, because better frequency stability is required for longer accumulation times. For coherent accumulation, the maximum possible dwell time for a given frequency resolution may be approximated as $T_{dw} = 2 / (3\Delta f)$.

Accordingly, under the above assumptions, the total processing time $T_R$ of the initial search is

$$T_R = (N_v \cdot N_t \cdot N_f)\, T_{dw} = 3\, N_v \cdot N_t \cdot f_{max}(10\, T_c\, /\, \gamma)^2.$$

Even though, the search process may be heavily parallelised, the above linearised processing time $T_R$ serves as a good measure for the complexity of the initial data acquisition method.

In particular, it is noted that the processing time for a complete search of all the cells of the above search space is proportional to the size $f_{max}$ of the frequency search space, thereby particularly extending the processing time for difficult reception conditions. When the frequency uncertainty $f_{max}$ is large, and when the SNR is low, the required dwell time is large.

It is further noted that in prior art systems the coherent accumulation times cannot be arbitrarily increased. In GPS signals, the navigation messages are encoded at a rate of 50bps, i.e. there is a bit transition every 20ms. In an unassisted situation, i.e. without a priori knowledge about the bit boundaries and the message contents, the maximum length for coherent accumulation has to be smaller than 20 ms, e.g. no longer than 10ms. However, when e.g. a 100ms coherent accumulation is replaced by a coherent accumulation of 10ms blocks and subsequent non-coherent accumulation of the accumulated bocks, $10^2 = 100$ blocks need to be accumulated in order to achieve the same SNR. Consequently, the processing time in prior art systems grows increasingly as the SNR degrades.

Additionally, the long accumulation times needed to work at low SNRs before dispreading require very narrow coherence bandwidths, i.e. a high stability of the local oscillators. Therefore, at low SNRs the obtainable stability of the local oscillators may become the limiting factor.

With reference to figs 3a-b and 4a-b, a method will be described that improves the efficiency of the initial signal acquisition and, thus, the processing requirements.

Figs. 3a-b illustrate more detailed functional block diagrams of embodiments of the digital receiver block. The digital receiver block 104 receives the digitized IF signal from the down-conversion and A/D block 103 shown in fig. 1. Hence, the received signal may be modelled as a sequence of chips according to the chip rate of the spreading code. The received signal at chip time k may be modelled as

$$r_k = \sum_{n=1}^{N_v} g_n b_{k-\Delta}^{(n)} c_{k-\Delta}^{(n)} e^{jk\varphi_n} + v_k.$$

Hence, the received signal is modelled as a sum of contributions from each of the $N_v$ visible satellites indexed $n=1,...,N_v$ and as an additional receiver noise component $v_k$. Here, $g_n$ denotes the path loss from the $n$-th satellite, $b_k^{(n)}$ denotes the navigation message bit from the $n$-th satellite at time $k$, i.e. $b_k^{(n)} = \pm 1$, $c_k^{(n)}$ denotes the chip value of the spreading code corresponding to satellite $n$ at time $k$, and $\varphi_n$ denotes the phase rotation per chip for the signal from satellite $n$.

Referring to fig. 3a, the received signal $r_k$ is fed into the digital receiver channel block 105 which determines accumulated correlation values $z(n,d)$, $d=0,...,$ 1023, $n = 1,...,N_v$. for each of the satellites and for different code delays $d$. In the functional block diagram of fig. 3a, this is illustrated by the plurality of correlation and accumulation blocks 310, each of which calculating the correlation values for a given satellite and for different code delays. Accordingly, each of the correlation and accumulation blocks 310 comprises 1023 multiplier blocks 304 and 1023 summation blocks 305. It is understood, however, that the actual degree of parallelisation of the correlation and accumulation functions depends on the actual implementation. The digital channel receiver block further comprises a differentiation block 306 that differentiates the received signal $r_k$ and feeds the differentiated signal into the correlation and accumulation blocks 310. The differentiation block 306 comprises a delay element 301 for delaying the received signal by one chip, a conjugation block 302 for generating the complex conjugate of the delayed signal and a multiplier 303 for multiplying the received signal with the complex conjugate of the delayed signal. Each of the correlation and accumulation blocks 310 comprises multiplier blocks 304 for correlating the differentiated received signal with corresponding delayed and effective reference spreading codes $s_{k-d}^{(n)} = c_{k-d}^{(n)} c_{k-d-1}^{(n)}$ and summation blocks 305 for accumulating the respective correlation signals. The effective reference spreading code $s_{k-d}^{(n)}$ for a given delay d and satellite n may be generated directly in a code generation circuit (not explicitly shown) or generated by a differentiation block from the original spreading codes $c_{k-d}^{(n)}$, which in turn may be generated by a code generator, as illustrated in fig. 4a. Code generators for spreading codes are known in the art of GPS receivers. Each summation block accumulates the signal over a predetermined number of $K$ chips. Hence, the resulting correlation value $z(n,d)$ may be written as

$$z(n,d) = \sum_{k=1}^{K} r_k r_{k-1}^* c_{k-d}^{(n)} c_{k-d-1}^{(n)}. \tag{1}$$

The number K of chip values to accumulate depends on the assumed SNR of the received signal. In one embodiment, a signal acquisition will be performed for a predetermined value of $K$. If the acquisition fails, $K$ is increased, and the acquisition process is repeated. The preferred numerical value of $K$ depends on the signal-to-noise ratio. In one embodiment, K may be selected to be $K=1023$.

In the following, the processing of the differentiation block 306 and the correlation and accumulation block 310 will be described in greater detail. For the purpose of the following description, the index n will be disregarded, corresponding to a case where $N_v=1$, i.e. the case of a single satellite. This is merely done to ease the readability of the following description and is not intended to limit the scope of the invention. A skilled person will immediately appreciate that the following results are equally applicable to a multi-satellite situation where cross-correlations to unrelated codes are negligible, as is the case for the spreading codes used in current GPS implementations.

Hence, in the simplified case of $N_v=1$, the correlation value may be written as

$$z(d) = \sum_{k=1}^{K} r_k r_{k-1}^* c_{k-d} c_{k-d-1} = \sum_{k=1}^{K} \left( r_k c_{k-d} \right) \left( r_{k-1} c_{k-d-1} \right)^*$$

$$= \sum_{k=1}^{K} b_{k-\Delta} b_{k-\Delta-1} \left( c_{k-\Delta} e^{jk\varphi} + v_k \right) \left( c_{k-1-\Delta}^* e^{-j(k-1)\varphi} + v_{k-1}^* \right) c_{k-d} c_{k-d-1}^*$$

$$= \sum_{k=1}^{K} b_{k-\Delta} b_{k-\Delta-1} \left( c_{k-\Delta} c_{k-\Delta-1}^* \right) \left( c_{k-d} c_{k-d-1} \right) e^{j\varphi} + v_k' + v_{k-1}'' + v_k v_{k-1}^*.$$

Defining a new effective spreading code $s_k$ according to $s_k = c_k c_{k-1}$, the above expression may be rewritten as

$$z(d) = e^{j\varphi} \sum_{k=1}^{K} b_{k-\Delta} b_{k-\Delta-1} s_{k-\Delta} s_{k-d} + w,$$

where $w$ is the total noise term after differential accumulation.

Consequently, the correlation operation is effectively performed with respect to the above new spreading code $s_k$. It is noted that $s_k$ is a Gold code of the same order and with the same autocorrelation properties as the original Gold code $c_k$.

It has further been realised that the above correlation value is substantially insensitive to the navigation message $b_k$, since the product $b_k b_{k-1}=1$ except when the bit transitions occur. However, since the bit transitions occur only at a small fraction of the time, e.g. for of the order of 1 out of $10^5$ chips, the error introduced by the bit transitions is negligible.

Hence, it is an advantage of the invention that it provides a determination of a decision variable that is insensitive to the navigation message, thereby allowing long coherent accumulation times. This in turn has the advantage that an efficient signal acquisition is provided even in the case of difficult reception conditions.

It has further been realised that the phase rotation term merely contributes as an overall factor, i.e. the phase rotation is not cumulative. Hence, it is an advantage that the calculation is not sensitive to frequency offsets or stability.

Consequently, the search space for the initial signal acquisition is considerably reduced, since a search along the frequency axis is not required. This is a particular advantage in situations with difficult reception conditions where the frequency uncertainty $f_{max}$ is large.

It is a further advantage that long accumulation times may be achieved, thereby allowing operation at low SNR, e.g. during indoor reception, without imposing high stability requirements on the local oscillators, thereby reducing the cost for the required components.

In comparison, the direct correlation of the received signal with the spreading code according to

$$y = \sum_{k=1}^{K} r_k c_{k-d} = \sum_{k=1}^{K} b_{k-\Delta} \left( c_{k-\Delta} e^{jk\varphi} + v_k \right) c_{k-d}$$

depends on the actual values $b_k$ of the navigation message and the phase rotation $e^{jk\varphi}$ provides an accumulative phase rotation over K chips that cannot be neglected unless the residual phase $\varphi$ is sufficiently small.

The linearised complexity of the initial search in the system of fig. 3b is

$$T_D = N_v N_t T_{dw}^{|D|} = N_v N_t \frac{10}{\gamma^2} T_c \ ,$$

i.e. independent of the magnitude $f_{max}$ of the frequency uncertainty. Here $T_{dw}^{(D)}$ is the dwell time.

It has been observed that the total operation count for the search can be reduced by a factor of 1.5-2, depending on the frequency uncertainty.

Still referring to fig. 3a, the correlation sums $z(n,d)$ generated by correlation and accumulation blocks 310 according to eqn. (1) are fed into the processing block 106. The processing block comprises a peak detection module 308 for detecting peak delay values $d'_n$ for one or more satellites, e.g. by comparing the largest $|z(n,d'_n)|$ for each satellite $n$ to the correlation floor for $d \neq d'_n$.

In the embodiment of fig. 3a, the code delay values $d'_n$ for one or more satellites are fed into the navigation processing block 107. In a network-based mode of operation, the code delays may be utilised as pseudoranges as an input to the network-assisted determination of the current position, see e.g. Heikki Kaaranen et al., "UMTS Networks: Archtectures, Mobility and Services," John Wiley & Sons, 1st edition, August 2001, ISBN 047148654X, p. 164.

Fig. 3b shows a functional block diagram of an alternative embodiment similar to the embodiment of fig. 3a. However, this embodiment is well-suited for an autonomous GPS receiver or a GPS receiver operating in an autonomous mode. In this embodiment, the processing block 106 further comprises a frequency detection module 309 which determines the angle argument $\hat{\varphi}^{(n)}$ of the peak correlation sum according to

$$\hat{\varphi}^{(n)} = \angle z(n,d'_n).$$

In the embodiment of fig. 3b, the frequency detection module 309 generates a number of phase error estimtes, one for each of the visible satellites detected by the peak detection module 308. Furthermore, the processing block 106 outputs the corresponding delay values $d'_n$, $n=1,...,N_a$ for the $N_a$ detected visible satellites. The digital signal processing block 104 of the embodiment of fig. 3b further comprises a number of correlation blocks 307, one for each of the $N_a$ detected visible satellites and each receiving a corresponding delay value and a corresponding phase error estimate. Each of the correlation blocks 307 determines the correlation of the received signal to the determined satellite code at the corresponding determined code delay according to

$$y_m^{(n)} = e^{-j\hat{\varphi}^{(n)}} \sum_{k=1}^{L} r_{k+mL} c_{k-d'_n}^{(n)} \ .$$

Here $y_m^{(n)}$ denotes the $m$-th bit of the navigation message from the $n$-th satellite, and the correlation is performed over $L=20 \cdot 1023$ chips, corresponding to the duration of one bit of the navigation message transmitted at a bit rate of 50 bits per second, and resulting in a frequency-compensated correlation. Accordingly, each correlation block 307 comprises a phase factor determination block 312 for determining a suitable phase factor corresponding to the detected phase error, and a multiplier 313 for multiplying the received signal with the determined phase factor. The correlation block 307 further comprises block 311 which generates the delayed spreading code for the corresponding satellite $n$, delayed by the determined delay $d'_n$. The output of blocks 311 and 313 are multiplied by multiplier 314, and the result is fed into accumulator 315. The accumulator 315 generates the above frequency-compensated correlation $y^{(n)}_m$ which is fed into the navigation processing block 107.

The navigation processing block 107 comprises a number of navigation message recovery blocks 316, one for each visible satellite. Each navigation message recovery block 316 recovers the corresponding navigation message from the correlations $y^{(n)}_m$. The data from the navigation messages from different satellites are then fed into location calculation block 317 that solves the corresponding location equations to determine the current position of the receiver.

In the embodiments of figs 3a-b, the differentiation of differentiation block 306 is performed on the incoming signal. In alternative embodiments the differentiation is performed after multiplication of the received signal with the reference sequence, as will be illustrated with reference to figs. 4a-b.

Figs. 4a-b schematically illustrate different embodiments of the ordering of differentiation and correlation blocks.

Fig. 4a illustrates the differentiation block 306 and one of the subsequent multipliers 304 and corresponding accumulators 305, as were described in connection with fig. 3a. The arrangement of fig. 4a further comprises a reference differentiation block 400 that generates the differentiated and delayed reference spreading code $s_{k-d}$ from the corresponding delayed original spreading code $c_{k-d}$. The delayed original spreading code $c_{k-d}$ is generated by a code generator circuit 410. The differentiation block 400 likewise comprises a delay block 401 for delaying the spreading code $c_{k-d}$ by one chip to obtain $c_{k-d-1}$, a conjugation block 402 for generating the complex conjugate $c^*_{k-d-1}$ of the delayed code, and a multiplier 403 for multiplying the original code chip with the delayed code chip to obtain $s_{k-d} = c_{k-d}c^*_{k-d-1}$. It is noted that, for spreading codes comprising real numbers, the conjugation block may be omitted.

Hence, in the embodiment of fig. 4a, the samples of the sequence of received signal samples are correlated with samples of the sequence of reference samples by

- differentiating the sequence of received signal samples and the sequence of reference samples; and
- multiplying the differentiated sequence of received signal samples with the differentiated sequence of reference samples to obtain the sequence of correlation samples.

It is understood that the receiver may directly generate the effective codes $s_k$ rather than first generating and subsequently differentiating the conventional codes $c_k$.

Fig. 4b illustrates an alternative arrangement in which the differentiation is performed after multiplication of the received signal with the reference sequence. In this embodiment, the received signal and the delayed reference spreading code are correlated by multiplier 407, and the correlated signal is fed into the differentiation block 408, comprising a delay block 404, a conjugation block 405, and a multiplier 406 as described in connection with the previous differentiation blocks. The differentiation block 408 generates a differentiated correlation signal which is fed into accumulator 305 that generates the correlation sum $z(n,d)$ as described above.

Hence, in the embodiment of fig. 4b, the samples of the sequence of received signal samples are correlated with samples of the sequence of reference samples by

- multiplying the sequence of received signal samples with the sequence of reference samples to obtain a sequence of multiplied samples; and
- differentiating the sequence of multiplied samples to obtain the sequence of correlation samples.

The relation between the embodiments of fig. 4a and 4b may be expressed as follows

$$(c_{k-d}r_k)\,(c_{k-d-1}r_{k-1})^* = (c_{k-d}c^*_{k-d-1})\,(r_K r^*_{k-1}).$$

In the above embodiments of a GPS receiver have been described that provide an efficient initial signal acquisition and reduced processing requirements. The GPS receiver described above implements a signal acquisition method that is not affected by the frequency offset and stability and is insensitive to the navigation message. In particular, the above method and arrangements for detecting correlation peaks in a received signal do not require a scan over all possible frequency offset values. The frequency uncertainty is removed via a differential operator and accumulation of differentiated correlated chip values. As a result practically unlimited coherent accumulation may be performed without requiring strict phase/frequency synchronisation of the receiver and without requiring knowledge of the navigation message, since the per-chip rotation remains negligible. The differential correlation sums are used to detect the correct code delays and the correlation sum corresponding to the true delay yields the frequency offset value. The receiver may use the detected peak position, i.e. the detected code delay, and the determined frequency offset value to perform conventional non-differential decorrelation to recover the navigation message in an autonomous or a network-assisted mode. In a network-based mode, the code delay values may be reported as pseudoranges to the network directly.

Although preferred embodiments of the present invention have been described and shown, the invention is not restricted to them, but may also be embodied in other ways within the scope of the subject matter defined in the following claims.

In particular, the invention has mainly been described in connection with GPS. However, it will be appreciated that the invention may also be applied to other signal reception systems where despreading of weak received signals is employed as a part of a signal detection system. For example, the invention may be applied to other positioning systems, e.g. the GLONASS system.

Even though the invention has mainly been described in connection with a receiver in which the signal is mixed down to IF, it is understood that the invention may also be applied in connection with other receiver architectures. Examples of such architectures include an architecture in which the RF signal is directly down-converted to baseband, a so-called homodyne or zero-IF receiver. In another embodiment referred to as a superheterodyne receiver, the down-mixing is performed in several steps.

It is further understood that the signal acquisition described herein may advantageously be used in an autonomous GPS receiver. However the signal detection may also be used in a signal receiver receiving a priori information, e.g. a GPS receiver integrated in a mobile terminal or any other portable communications device where the mobile terminal receives assistance information from the mobile network, e.g. information aiding the satellite selection, the frequency synchronisation, Doppler estimation, timing synchronisation, navigation message, or any subset or combination of the above. For example, in a network assisted system the method described herein may be used in situation without network coverage, to improve the indoor operation capability, and/or the like. In some embodiments in connection with a network-based system, the pseudo-range reporting to the network may be improved.

The invention can be implemented by means of hardware comprising several distinct elements, and by means of a suitably programmed microprocessor. In the device claims enumerating several means, several of these means can be embodied by one and the same item of hardware, e.g. a suitably programmed microprocessor, one or more digital signal processor, one or more ASIC circuit, or a combination of the above. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

**Claims**

1. A method of detecting a spreading code of a received spread-spectrum signal, the method comprising correlating the received spread-spectrum signal with a reference signal to detect the presence of one of a number of reference spreading codes;
   **characterised in that** the correlating further comprises differentiating at least one of the received spread-spectrum signal, the reference signal, and the correlation signal, the correlating resulting in a differentiated correlation signal.

2. A method according to claim 1, further comprising accumulating the differentiated correlation signal to obtain a correlation value.

3. A method according to claim 2, further comprising detecting a frequency error from the determined correlation value.

4. A method according to claim 3, further comprising determining a frequency compensation factor from the angle argument of the correlation value.

5. A method according to any one of claims 2 through 4, wherein accumulating comprises coherently accumulating the differentiated correlation signal.

**6.** A method according to claim 5, wherein the received spread-spectrum signal comprises a digital information message encoded as bits, wherein bit transitions of the digital information message occur at predetermined transition time intervals; and wherein coherently accumulating comprises coherently accumulating the differentiated correlation signal over a time interval that is longer than half the transition time interval.

**7.** A method according to any one of claims 1 through 6, comprising

- providing a plurality of reference signals modulated by said one of a number of reference spreading codes and delayed by respective relative code delays;
- correlating the received spread-spectrum signal with the plurality of reference signals to obtain a corresponding plurality of differentiated correlation signals;
- accumulating each of the plurality of differentiated correlation signals to obtain a corresponding plurality of correlation values for respective code delays; and
- detecting a correlation peak in the plurality of correlation values to identify a code delay of the received spread-spectrum signal.

**8.** A method according to any one of claims 1 through 7, comprising

- correlating the received spread-spectrum signal with a plurality of reference signals, each modulated by a corresponding one of the number of reference spreading codes, to obtain a corresponding plurality of differentiated correlation signals;
- accumulating each of the plurality of differentiated correlation signals to obtain a corresponding plurality of correlation values for respective reference spreading codes; and
- detecting a correlation peak in the plurality of correlation values to identify a spreading code of the received spread-spectrum signal.

**9.** A method according to any one of claims 1 through 8, further comprising despreading the received spread-spectrum signal; and extracting information data from the despread signal.

**10.** A method according to any one of claims 1 through 9, wherein the correlating comprises

- differentiating the received spread-spectrum signal and the reference signal to obtain a differentiated received signal and a differentiated reference signal; and
- determining the differentiated correlation signal from the differentiated received signal and the differentiated reference signal.

**11.** A method according to any one of claims 1 through 9, wherein the correlating comprises

- determining a correlation signal from the received spread-spectrum signal and the reference signal; and
- differentiating the correlation signal to obtain the differentiated correlation signal.

**12.** A method according to any one of claims 1 through 11, wherein differentiating a signal comprises multiplying a signal sample of the signal with the complex conjugate of a preceding signal sample.

**13.** A method according to any one of claims 1 through 12, wherein the reference signal is modulated at a predetermined chip rate by a reference spreading code comprising a predetermined sequence of code chips; wherein the correlating comprises sampling the reference spread-spectrum signal resulting in a sequence of received signal samples; wherein the reference signal comprises a sequence of reference samples; and wherein the correlating comprises

- correlating samples of the sequence of received signal samples with samples of the sequence of reference samples to obtain a sequence of correlation samples; and
- accumulating samples of at least a sub-sequence of the sequence of correlation samples to obtain a correlation value.

**14.** A method according to claim 13, wherein correlating samples of the sequence of received signal samples with samples of the sequence of reference samples further comprises

- differentiating the sequence of received signal samples and the sequence of reference samples;
- multiplying the differentiated sequence of received signal samples with the differentiated sequence of reference samples to obtain the sequence of correlation samples.

15. A method according to claim 13, wherein correlating samples of the sequence of received signal samples with samples of the sequence of reference samples further comprises

- multiplying the sequence of received signal samples with the sequence of reference samples to obtain a sequence of multiplied samples; and
- differentiating the sequence of multiplied samples to obtain the sequence of correlation samples.

16. A method according to any one of claims 1 through 15, wherein the spreading code is indicative of one of a number of signal sources.

17. A method according to claim 16, wherein the signal source is one of a number of space vehicles of a positioning system.

18. A method according to claim 17, wherein the positioning system is GPS.

19. A method according to any one of claims 1 through 18, wherein the spreading code is a pseudo-random-noise code.

20. A method according to any one of claims 1 through 18, wherein the spreading code is a Gold code.

21. An arrangement for detecting a spreading code of a received spread-spectrum signal, the arrangement comprising correlation means (105) for correlating the received spread-spectrum signal with a reference signal to detect the presence of one of a number of reference spreading codes;
**characterised in that** the correlation means comprises means (306,400,408) for differentiating at least one of the received spread-spectrum signal, the reference signal, and the correlation signal, the correlating resulting in a differentiated correlation signal.

22. An arrangement according to claim 21, further comprising accumulator means (305) for accumulating the differentiated correlation signal to obtain a correlation value.

23. An arrangement according to claim 22, further comprising means (309) for detecting a frequency error from the determined correlation value.

24. An arrangement according to claim 23, further comprising means (312) for determining a frequency compensation factor from the angle argument of the correlation value.

25. An arrangement according to any one of claims 22 through 24, wherein the received spread-spectrum signal comprises a digital information message encoded as bits, wherein bit transitions of the digital information message occur at predetermined transition time intervals; and wherein the accumulator means is adapted to coherently accumulate the differentiated correlation signal over a time interval that is longer than half the transition time interval.

26. An arrangement according to any one of claims 21 through 25,
wherein the arrangement further comprises means (410) for providing a plurality of reference signals modulated by said one of a number of reference spreading codes and delayed by respective relative code delays;
wherein the correlation means is adapted to correlate the received spread-spectrum signal with the plurality of reference signals and to generate a corresponding plurality of differentiated correlation signals; and
wherein the arrangement further comprises accumulator means (305) for accumulating each of the plurality of differentiated correlation signals and for generating a corresponding plurality of correlation values for respective code delays; and peak detection means (308) for detecting a correlation peak in the plurality of correlation values and for identifying a code delay of the received spread-spectrum signal.

27. An arrangement according to any one of claims 21 through 26,
wherein the correlation means is adapted to correlate the received spread-spectrum signal with a plurality of reference signals, each modulated by a corresponding one of the number of reference spreading codes, and to generate a corresponding plurality of differentiated correlation signals; and

wherein the arrangement further comprises accumulator means (305) for accumulating each of the plurality of differentiated correlation signals and for generating a corresponding plurality of correlation values for respective reference spreading codes; and peak detection means (308) for detecting a correlation peak in the plurality of correlation values and for identifying a spreading code of the received spread-spectrum signal.

28. An arrangement according to any one of claims 21 through 27,

wherein the means for differentiating is adapted to differentiate the received spread-spectrum signal and the reference signal and to generate a differentiated received signal and a differentiated reference signal; and

wherein the correlation means is adapted to determine the differentiated correlation signal from the differentiated received signal and the differentiated reference signal.

29. An arrangement according to any one of claims 21 through 27,

wherein the correlation means is adapted to determine a correlation signal from the received spread-spectrum signal and the reference signal; and

wherein the means for differentiating is adapted to differentiate the correlation signal to obtain the differentiated correlation signal.

30. An arrangement according to any one of claims 21 through 29, wherein the means for differentiating a signal comprises a multiplier (303,403,406) for multiplying a signal sample of the signal with the complex conjugate of a preceding signal sample.

31. A device comprising an arrangement according to any one of claims 21 through 30.

32. A device according to claim 31, wherein the device is a receiver for use in a Global Positioning System.

33. A device according to claim 31, wherein the device is an autonomous GPS receiver.

34. A device according to claim 31 or 32, wherein the device is a communications device.

EP 1 545 019 A1

Fig. 1

101
102 Pre-amp
103 RF/IF A/D
104 DSP
105 Dig. Rec.
106 Rec. Proc.
107 Navig. Proc
108 UI

Fig. 3a

104
105
310
310
310

$s_k^{(n)}$
304
305
$z(n,0)$

$s_{k-d}^{(n)}$
305
$z(n,d)$
304

$s_{k-1023}^{(n)}$
305
$z(n,1023)$
304

306
303
$r_k$
$Z^{-1}$ 301
$()^*$ 302

106
308 PD
$d'_n$
107

*Fig. 3b*

Fig. 2

Fig. 4a

Fig. 4b

**European Patent Office**

**EUROPEAN SEARCH REPORT**

Application Number

EP 03 38 8089

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00/49720 A (JOUTSENSALO JYRKI ;JYVAESKYLAEN TEKNOLOGIAKESKUS (FI); RISTANIEMI) 24 August 2000 (2000-08-24)<br><br>* abstract *<br>* page 8, paragraph 2 *<br>* page 18, line 16 - line 18 *<br>* page 27, line 16 - page 28, line 15 *<br>* page 29, paragraph 13 - paragraph 17 *<br>--- | 1,2,5, 7-9, 11-13, 15-22, 25-27, 29-34 | H04B1/707 G01S1/00 |
| X | CHAR-DIR CHUNG: "DIFFERENTIALLY COHERENT DETECTION TECHNIQUE FOR DIRECT-SEQUENCE CODE ACQUISITION IN A RAYLEIGH FADING MOBILE CHANNEL" IEEE TRANSACTIONS ON COMMUNICATIONS, IEEE INC. NEW YORK, US, vol. 43, no. 2/4, PART 2, 1 February 1995 (1995-02-01), pages 1116-1126, XP000502602 ISSN: 0090-6778<br>* abstract *<br>* figure 1 *<br>* page 1117, left-hand column, paragraph II *<br>* page 1122, right-hand column, line 2 - page 1123, left-hand column, line 26 *<br>---<br>-/-- | 1,3,4,9, 10, 12-15, 19,21, 23,24, 28,30, 31,34 | |

**TECHNICAL FIELDS SEARCHED (Int.Cl.7)**

H04B
G01S

The present search report has been drawn up for all claims

| Place of search | Date of completion of the search | Examiner |
|---|---|---|
| THE HAGUE | 14 June 2004 | Amadei, D |

EPO FORM 1503 03.82 (P04C01)

**European Patent Office**

## EUROPEAN SEARCH REPORT

Application Number

EP 03 38 8089

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ZARRABIZADEH M H ET AL: "A DIFFERENTIALLY COHERENT PN CODE ACQUISITION RECEIVER FOR CDMA SYSTEMS" IEEE TRANSACTIONS ON COMMUNICATIONS, IEEE INC. NEW YORK, US, vol. 45, no. 11, 1 November 1997 (1997-11-01), pages 1456-1465, XP000751361 ISSN: 0090-6778 * abstract * * page 1456, right-hand column, line 41 - line 47 * * page 1464, left-hand column, line 11 - line 14 * * figures 1A,1B,2 * --- | 1,2,5-9, 11-13, 15,16, 19,21, 22, 25-27, 29-31,34 | |
| X | JOUTSENSALO J ET AL: "DELAY ESTIMATION IN CDMA SYSTEM BY DIFFERENTIALLY COHERENT EIGENANALYSIS" INTERNATIONAL CONFERENCE ON ELECTRONICS, CIRCUITS AND SYSTEMS, XX, XX, vol. 3, 5 September 1999 (1999-09-05), pages 1279-1282, XP002935518 * abstract * * page 1279, paragraph 1 * * page 1279, paragraph 2 * * page 1250, paragraph 3 * ----- | 1,9,10, 12-14, 16,21, 28,30, 31,34 | TECHNICAL FIELDS SEARCHED (Int.Cl.7) |

The present search report has been drawn up for all claims

| Place of search | Date of completion of the search | Examiner |
|---|---|---|
| THE HAGUE | 14 June 2004 | Amadei, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 545 019 A1**

## ANNEX TO THE EUROPEAN SEARCH REPORT
## ON EUROPEAN PATENT APPLICATION NO.

EP 03 38 8089

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2004

| Patent document cited in search report | Publication date | Patent family member(s) | Publication date |
|---|---|---|---|
| WO 0049720 A | 24-08-2000 | AU 2674900 A<br>WO 0049720 A2 | 04-09-2000<br>24-08-2000 |

EPO FORM P0459

For more details about this annex : see Official Journal of the European Patent Office, No. 12/82